(19) Europäisches Patentamt / European Patent Office / Office européen des brevets

(11) **EP 4 180 483 A1**

(12) **EUROPEAN PATENT APPLICATION**
published in accordance with Art. 153(4) EPC

(43) Date of publication:
**17.05.2023 Bulletin 2023/20**

(21) Application number: **21837474.2**

(22) Date of filing: **06.07.2021**

(51) International Patent Classification (IPC):
**C08K 5/54** (2006.01)   **C08K 7/18** (2006.01)
**C08L 101/02** (2006.01)   **C08J 5/18** (2006.01)
**C08K 3/22** (2006.01)   **C08K 3/36** (2006.01)

(52) Cooperative Patent Classification (CPC):
**C08J 5/18; C08K 3/22; C08K 3/36; C08K 5/54;
C08K 7/18; C08L 101/02**

(86) International application number:
**PCT/JP2021/025479**

(87) International publication number:
**WO 2022/009887 (13.01.2022 Gazette 2022/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.07.2020 JP 2020118017**

(71) Applicant: **Showa Denko Materials Co., Ltd.
Tokyo 100-6606 (JP)**

(72) Inventors:
• **YOSHIDA, Kazuhiro
Tokyo 100-6606 (JP)**

• **MATSUMOTO, Takuro
Tokyo 100-6606 (JP)**
• **NAKAMURA, Koji
Tokyo 100-6606 (JP)**
• **ISHIDA, Yasuhisa
Tokyo 100-6606 (JP)**
• **YAMAMOTO, Takaya
Tokyo 100-6606 (JP)**
• **MIZUNOE, Saori
Tokyo 100-6606 (JP)**

(74) Representative: **Becker Kurig & Partner
Patentanwälte mbB
Bavariastraße 7
80336 München (DE)**

(54) **RESIN COMPOSITION, FILM, AND CURED PRODUCT**

(57) A resin composition that contains: a resin that has a polar group; and an insulating filler that, on a volume-based particle size distribution curve, has a particle size of no more than 5.0 μm at an accumulation of 50% from the smaller side and a particle size of no more than 10.0 μm at an accumulation of 99% from the smaller side. The insulating filler is at least 50 volume% of the total solid content of the resin composition.

EP 4 180 483 A1

**Description**

[Technical Field]

The present disclosure relates to a resin composition, a film, and a cured product.

[Background Art]

Ultrasonic reflecting materials are used in medical ultrasonic diagnostic devices, inter-vehicle distance detection systems for automobiles, obstacle detection systems, and the like as acoustic materials of corrosion checkers for buried pipes in concrete crack detection, earphones, and speakers or the like, and noise reduction, high definition, system simplification, and the like are desired for these materials (for example, Japanese Patent Laid-Open No. 2019-017501).

[Summary of Invention]

[Technical Problem]

Ultrasonic signals may be reflected at interfaces of dissimilar materials and interact with transmitted signals. The interaction of the transmitted and reflected signals allows the ultrasonic signal to be amplified. This ultrasonic signal reflection is due to the difference in specific acoustic impedance between different materials, which is expressed as the product of density and the speed of sound. Therefore, an ultrasonic reflecting material for amplifying ultrasonic signals is required to have a high specific acoustic impedance (hereinafter, also simply referred to as "acoustic impedance"). In particular, an ultrasonic reflecting material as a functional film used around a piezoelectric element is required to have high acoustic impedance, be highly insulating and have a low noise ratio with respect to reflected ultrasonic waves. In addition, the functional film is obtained, for example, by using a resin composition containing a resin, and specifically, is obtained as a film obtained by drying the resin composition, a cured product obtained by curing the resin composition, or the like.

In view of the above circumstances, the present disclosure provides a resin composition that provides a functional film with high acoustic impedance, insulating properties, and a low noise ratio, as well as a film and a cured product using the same.

[Solution to Problem]

Means for solving the above problems include the following aspects.

<1> A resin composition that contains

a resin that has a polar group, and
an insulating filler that, on a volume-based particle size distribution curve, has a particle size of no more than 5.0 μm at a cumulative 50% from a smaller side and a particle size of no more than 10.0 μm at a cumulative of 99% from the smaller side, wherein
the insulating filler accounts for at least 50 volume% of the total solid content of the resin composition.

<2> The resin composition according to <1>, in which
the insulating filler contains at least one selected from a group consisting of aluminum oxide, zirconium oxide, titanium oxide, bismuth oxide, silicon dioxide, and tungsten oxide.
<3> The resin composition according to <1> or <2>, in which
the polar group contains at least one heteroatom selected from a group consisting of nitrogen atoms, oxygen atoms, and sulfur atoms.
<4> The resin composition according to any one of <1> to <3>, in which
the resin having a polar group contains at least one selected from the group consisting of polyamide-imide resins, epoxy resins, acrylic resins, polyester resins, and polyether resins.
<5> The resin composition according to any one of <1> to <4>, further containing a coupling agent.
<6> The resin composition according to <5>, in which
the coupling agent contains a silane coupling agent.
<7> The resin composition according to any one of <1> to <6>, further containing a solvent.
<8> A film obtained by drying the resin composition according to any one of <1> to <7>.
<9> The film according to <8>, having a maximum height Rz of 5 μm or less.

<10> The film according to claim <8> or <9>, having an arithmetic mean roughness Ra of 1 $\mu$m or less.
<11> The film according to any one of <8> to <10>, having an average thickness of 50 $\mu$m or less.
<12> The film according to any one of <8> to <11>, which is used as an ultrasonic reflecting material.
<13> A cured product obtained by curing the resin composition according to any one of <1> to <7>.
<14> The cured product according to <13>, having a maximum height Rz of 5 $\mu$m or less.
<15> The cured product according to <13> or <14>, having an arithmetic mean roughness Ra of 1 $\mu$m or less.
<16> The cured product according to any one of <13> to <15>, having an average thickness of 50 $\mu$m or less.
<17> The cured product according to any one of <13> to <16>, which is used as an ultrasonic reflecting material.

[Advantageous Effects of Invention]

According to the present disclosure, a resin composition that provides a functional film with high acoustic impedance, insulating properties, and a low noise ratio, as well as a film and a cured product using the same are provided.

[Description of Embodiments]

Hereinafter, aspects for carrying out the present disclosure will be described in detail. However, the present invention is not limited to the following embodiments. In the following embodiments, the constituent elements (including element steps and the like) are not essential unless otherwise specified. The same applies to numerical values and their ranges, which do not limit the present invention.
In the present disclosure, the term "step" includes a step that is independent of other steps, and when the purpose of a step is achieved even when the steps cannot be clearly distinguished from other steps, this step is also included.
In the present disclosure, the numerical ranges indicated using "to" includes the numerical values before and after "to" as the minimum and maximum values, respectively.
In the numerical ranges described step by step in the present disclosure, the upper limit value or the lower limit value of one numerical range may be replaced with the limit value or the lower limit value of another numerical range described step by step. Moreover, in the numerical ranges described in the present disclosure, the upper limit value or the lower limit value of the numerical ranges may be replaced with the values shown in the examples.
In the present disclosure, each component may contain a plurality of types of applicable substances. When there are multiple types of substances corresponding to each component in the composition, the proportional content or content of each component means the total proportional content or content of the plurality of types of substances present in the composition unless otherwise specified.
Particles corresponding to each component in the present disclosure may include a plurality of types. When a plurality of types of particles corresponding to each of components is present in the composition, the particle size of each component means a value for a mixture of the plurality of types of particles present in the composition, unless otherwise specified.
In the present disclosure, the term "layer" or "film" refers to the case where the layer or film is formed in the entire region when observing the region where the layer or film is present, and includes the case where the layer or film is formed only in a part of the region.

<<Resin Composition>>

In the resin composition according to the present disclosure, a resin that has a polar group, and an insulating filler that, on a volume-based particle size distribution curve, has a particle size (hereinafter referred to as "D50") of no more than 5.0 $\mu$m at a cumulative of 50% from the smaller side and a particle size (hereinafter referred to as "D99") of no more than 10.0 $\mu$m at a cumulative of 99% from the smaller side, are contained, and the insulating filler accounts for at least 50 volume% of the total solid content of the resin composition.
The above resin composition uses 50 volume% or more of an insulating filler having a D50 of 5.0 $\mu$m or less and a D99 of 10.0 $\mu$m or less, and accordingly, a functional film is obtained that combines high acoustic impedance, insulation, and low noise ratio. Specifically, a resin composition using a resin having a polar group and 50 volume% or more of an insulating filler provides a functional film with insulating properties and high acoustic impedance, while a noise ratio of the functional film tends to be high. Although the reason why the noise ratio of the functional film increases is not clear, it is presumed that the ultrasonic waves reflected from the surface of the functional film are diffusely reflected due to the high surface roughness of the functional film. On the other hand, in the above resin composition, a functional film having a small surface roughness is obtained because the insulating filler has a D50 of 5.0 $\mu$m or less and a D99 of 10.0 $\mu$m or less, and it is presumed that the obtained functional film has a low noise ratio.
Each component contained in the resin composition will be described below.

<Insulating filler>

The resin composition of the present disclosure contains an insulating filler having a D50 of 5.0 $\mu$m or less and a D99 of 10.0 $\mu$m or less. The proportional content of the insulating filler is 50 volume% or more of the total solid content of the resin composition.

Examples of insulating fillers include metal oxides such as aluminum oxide, zirconium oxide, titanium oxide, bismuth oxide, silicon dioxide, cerium oxide, tungsten oxide, and sintered uranium oxide; barium titanate; tungsten carbide; tungsten; and zirconium. One type of insulating filler may be used alone, or two or more types may be used in combination. When the resin composition contains two or more insulating fillers, the above D50 and D99 are values calculated from the particle size distribution curve of the entire insulating filler contained in the resin composition.

Among these, the insulating filler preferably contains at least one selected from a group consisting of aluminum oxide, zirconium oxide, titanium oxide, bismuth oxide, silicon dioxide, and tungsten oxide. In addition, the insulating filler is preferably at least one selected from the group consisting of aluminum oxide, zirconium oxide, titanium oxide, barium titanate, and bismuth oxide from the viewpoint of high hardness and uniform particle shape, and more preferably at least one selected from the group consisting of aluminum oxide, zirconium oxide, and bismuth oxide.

The volume resistivity of the insulating filler at 25°C is preferably $1 \times 10^6$ $\Omega \cdot$cm or more, more preferably $1 \times 10^8$ Q cm or more, and further preferably $1 \times 10^{10}$ Q cm or more.

The D50 of the insulating filler is 5.0 $\mu$m or less, preferably 3.0 $\mu$m or less from the viewpoint of a low noise ratio, more preferably 2.0 $\mu$m or less, and further preferably 1.0 $\mu$m or less. The lower limit value of D50 of the insulating filler is not particularly limited, and may be 0.001 $\mu$m or more. From the above viewpoints, D50 of the insulating filler is preferably 0.001 $\mu$m to 5.0 $\mu$m, more preferably 0.001 $\mu$m to 3.0 $\mu$m, further preferably 0.001 $\mu$m to 2.0 $\mu$m, and particularly preferably 0.001 $\mu$m to 1.0 $\mu$m.

The D99 of the insulating filler is 10.0 $\mu$m or less, preferably 5.0 $\mu$m or less from the viewpoint of a low noise ratio, more preferably 4.5 $\mu$m or less, and further preferably 4.0 $\mu$m or less. The lower limit value of D99 of the insulating filler is not particularly limited, and may be 0.1 $\mu$m or more. From the above viewpoints, D99 of the insulating filler is preferably 0.1 $\mu$m to 10.0 $\mu$m, more preferably 0.1 $\mu$m to 5.0 $\mu$m, and further preferably 0.1 $\mu$m to 4.0 $\mu$m.

Here, the D50 and D99 of the insulating filler contained in the resin composition and the D50 and D99 of the insulating filler contained in the functional film formed using the resin composition are obtained as follows.

Specifically, on a volume-based particle size distribution curve, D50 is the particle size when the cumulative from the smaller side is 50%, and D99 is the particle size when the cumulative from the smaller side is 99%.

The particle size distribution curve of the insulating filler contained in the resin composition is obtained by observing the cross section of the cured product of the resin composition with a scanning electron microscope (SEM) and obtaining the equivalent circle diameter for 20 pieces of insulating filler.

In addition, when obtaining D50 and D99 of an insulating filler alone (for example, an insulating filler that is a raw material of a resin composition), D50 and D99 may be obtained by a laser diffraction scattering particle size distribution measurement method using, for example, a particle size distribution measuring device using a laser light scattering method (for example, "SALD-3000" manufactured by Shimadzu Corporation).

The shape of the insulating filler is not particularly limited, and may be spherical, powdery, needle-like, fibrous, plate-like, angular, polyhedral, scale-like, or the like. From the viewpoint of low noise ratio, the shape of the insulating filler is preferably polyhedral or spherical, more preferably spherical.

From the viewpoint of low noise ratio, the aspect ratio of the insulating filler is preferably 5 or less, preferably 4 or less, and more preferably 3 or less. The aspect ratio of the insulating filler contained in the resin composition is obtained by observing the cross section of the cured product of the resin composition with a scanning electron microscope (SEM) and averaging the aspect ratios of 20 pieces of insulating filler.

The specific gravity of the insulating filler is not particularly limited, and may be appropriately adjusted according to the application of the resin composition. The specific gravity of the insulating filler may be 2 or more, or 3 or more. The upper limit of the specific gravity of the insulating filler is not particularly limited. The specific gravity of the insulating filler may be, for example, 10.0 or less.

In the present disclosure, the specific gravity of the filler represents the ratio of the true specific gravity of the measurement sample to the true specific gravity of water, which is measured by the ratio of the mass of the measurement sample to the mass of the same volume of pure water under atmospheric pressure according to JIS K 0061:2001 and JIS Z 8807:2012.

When the resin composition contains two or more types of insulating fillers, the specific gravity of the insulating fillers refers to the value of the mixture of the insulating fillers contained in the resin composition.

The proportional content of the insulating filler is 50 volume% or more of the total solid content of the resin composition, preferably 55 volume% or more, and more preferably 60 volume% or more, from the viewpoint of high acoustic impedance. The upper limit of the proportional content of the insulating filler is not particularly limited, and from the viewpoint of handling properties of the resin composition, the proportional content of the insulating filler may be 90 volume% or less, 85 volume% or less, or 80 volume% or less. From the above viewpoints, the proportional content of the insulating filler in the total solid content of the resin composition is preferably 50 volume% to 90 volume%, more preferably 55 volume% to 85 volume%, further preferably 60 volume% to 85 volume%, and particularly preferably 60 volume% to 80 volume%.

The solid content of the resin composition means the component after removing the volatile components from the resin composition.

The proportional content of the insulating filler in the total solid content of the resin composition is preferably 70% by mass or more, more preferably 80% by mass or more, further preferably 88% by mass or more, particularly preferably 90% by mass or more, and most preferably 92% by mass or more. The upper limit of the proportional content of the insulating filler in the total solid content of the resin composition is not particularly limited, and may be 99% by mass or less. The proportional content of the insulating filler in the total solid content of the resin composition is preferably 70% by mass to 99% by mass, more preferably 80% by mass to 99% by mass, further preferably 88% by mass to 99% by mass, particularly preferably 90% by mass to 99% by mass, and most preferably 92% by mass to 99% by mass.

<Resin>

The resin composition of the present disclosure contains a resin having a polar group. The resin composition of the present disclosure contains 50 volume% or more of an insulating filler in order to obtain a functional film with both high acoustic impedance and insulating properties. However, when the insulating filler is highly filled, it is difficult to obtain sufficient adhesion of the obtained functional film to the base material. Therefore, in the resin composition of the present disclosure, a resin having a polar group is used to improve the interaction with the base material, thereby obtaining high acoustic impedance and adhesion to the base material.

A polar group represents an atomic group having polarity due to bonding between atoms having different electronegativities. Examples of polar groups include groups having heteroatoms other than carbon atoms and hydrogen atoms, more specifically, groups containing at least one heteroatom selected from the group consisting of nitrogen atoms, oxygen atoms, sulfur atoms, boron atoms, phosphorus atoms, and silicon atoms. Among these, the polar group is preferably a group containing at least one heteroatom selected from the group consisting of nitrogen atoms, oxygen atoms, and sulfur atoms. More specifically, examples of polar groups include an amino group, an amide group, an imide group, a cyano group, a nitro group, a hydroxy group, a carboxyl group, a carbonyl group, a thiol group, a sulfo group, a thionyl group, an ester bond, an ether bond, a sulfide bond, a urethane bond, and a urea bond, and at least one selected from the group consisting of an amide group, an imide group, a hydroxy group, an amino group, a carboxyl group, a carbonyl group, an ether bond, and a urea bond is preferable. The polar group may be present on the main chain of the resin or may be present on the side chain.

The type of resin having a polar group is not particularly limited as long as the resin has a polar group, and may be a thermosetting resin, a thermoplastic resin, or a combination thereof.

Moreover, the resin having a polar group may be in the state of a monomer having a functional group capable of causing a polymerization reaction by heating or in the state of a polymer that has already been polymerized. Specific examples of resins having a polar group include vinyl polymerization resins having a polar group, acrylic resins, polyamide resins, polyimide resins, polyamide-imide resins, polyurethane resins, polyester resins, polyether resins, epoxy resins, oxazine resins, bismaleimide resins, phenol resins, unsaturated polyester resins, silicone resins, and phenoxy resin. Among these, the resin having a polar group preferably contains at least one selected from the group consisting of polyamide-imide resins, epoxy resins, acrylic resins, polyester resins, and polyether resins. One type of resin may be used alone, or two or more types may be used in combination.

From the viewpoint of high acoustic impedance, the resin having a polar group preferably contains a thermosetting resin. From the viewpoint of high acoustic impedance and low noise ratio, the thermosetting resin having a polar group preferably has an aromatic ring, and among the aromatic rings, preferably has a condensed ring in which two or more aromatic rings are condensed. Examples of condensed rings include a naphthalene ring, an anthracene ring, and a phenanthrene ring. The thermosetting resin having a polar group is preferably a thermosetting resin having a polar group and a condensed ring, and more preferably a thermosetting resin having a polar group and a naphthalene ring, from the viewpoint of high acoustic impedance and a low noise ratio.

From the viewpoint of high acoustic impedance, the proportional content of the thermosetting resin having a polar group with respect to the total amount of the resin is preferably 50% by mass or more, more preferably 60% by mass or more, and further preferably 70% by mass or more. The proportional content of the thermosetting resin having a polar group with respect to the total amount of the resin may be 100% by mass or less, may be 90% by mass or less, or may be 80% by mass or less.

When the resin composition contains a thermosetting resin having a polar group, the proportional content of the thermosetting resin having a polar group relative to the solid content of the resin composition is 0.01% by mass to 10% by mass, 0.1% by mass to 9% by mass, or 1% by mass to 8% by mass.

Examples of thermosetting resins having a polar group include epoxy resins, phenol resins, melamine resins, urea resins, and thermosetting polyimide resins. Among these, the thermosetting resin having a polar group is preferably an epoxy resin or a phenol resin, and more preferably an epoxy resin, from the viewpoint of high acoustic impedance.

The epoxy resin is not particularly limited as long as two or more epoxy resins are present in one molecule.

Specific examples of epoxy resins include bisphenol A type epoxy resin, bisphenol F type epoxy resin, bisphenol S type epoxy resin, hydrogenated bisphenol A type epoxy resin, phenol novolac type epoxy resin, cresol novolac type epoxy resin, naphthalene type epoxy resin, anthracene type epoxy resin, biphenol type epoxy resin, biphenyl novolac type epoxy resin, and cycloaliphatic epoxy resin.

Among these, the epoxy resin is preferably an epoxy resin having a polar group and an aromatic ring, more preferably an epoxy resin having a polar group and a condensed ring, and further preferably an epoxy resin having a polar group and a naphthalene ring, from the viewpoint of high acoustic impedance and low noise ratio.

Preferable specific examples of epoxy resins include those having substituents such as ether groups and alicyclic epoxy groups in the above epoxy resins. As the epoxy resin, an epoxy resin having a heteroatom other than an oxygen atom derived from an epoxy group or a glycidyloxy group of the epoxy resin is preferable.

The epoxy resin may be, for example, an epoxy resin containing a nitrogen atom and a hydrogen atom bonded to the nitrogen atom. In a preferable aspect, the epoxy resin may have a heterocyclic structure containing a nitrogen atom and a hydrogen atom bonded to the nitrogen atom. Such a heterocyclic structure includes, for example, a glycoluril structure.

The molecular weight of the epoxy resin is not particularly limited, and is, for example, 100 to 1,500, may be 150 to 1,000, or may be 200 to 500.

When the resin composition contains an epoxy resin, the content of the epoxy resin relative to the total amount of the resin may be 80% by mass or more, 90% by mass or more, or 100% by mass. Further, the proportional content of the epoxy resin with respect to the total amount of the resin may be 10% by mass to 90% by mass, may be 20% by mass to 80% by mass, may be 30% by mass to 80% by mass, or may be 40% by mass to 80% by mass.

When the resin composition contains an epoxy resin, the proportional content of the epoxy resin relative to the solid content of the resin composition may be 0.01% by mass to 10% by mass, may be 0.1% by mass to 9% by mass, or may be 1% by mass to 8% by mass.

When the resin having a polar group contains a thermosetting resin, the resin composition may further contain a curing agent. For example, when an epoxy resin is used as a thermosetting resin having a polar group, curing agents such as polyaddition curing agents (for example, acid anhydride curing agents, amine curing agents, phenolic curing agents, and mercaptan curing agents); and latent curing agents such as imidazole may be used in combination.

When the resin having a polar group is used to be polymerized in combination with a curing agent, the polar group contained in the resin having a polar group may be a polar group produced as a result of the polymerization reaction.

When the resin having a polar group contains a thermosetting resin, the resin composition may further contain a thermoplastic resin. The thermoplastic resin contained in the resin composition is preferably a thermoplastic resin having a polar group. From the viewpoint of achieving both high acoustic impedance and high film strength, the resin composition preferably contains both a thermosetting resin having a polar group and a thermoplastic resin having a polar group.

When the resin composition contains both a thermosetting resin having a polar group and a thermoplastic resin having a polar group, the proportional content of the thermoplastic resin having a polar group with respect to the total amount of the resin is 50% by mass or less, may be 40% by mass or less, or may be 30% by mass or less.

In addition, when the resin composition contains both a thermosetting resin having a polar group and a thermoplastic resin having a polar group, the proportional content of the thermoplastic resin having a polar group relative to the solid content of the resin composition is 0.01% by mass to 5% by mass, may be 0.1% by mass to 4% by mass, or 1% by mass to 3% by mass.

Examples of the thermoplastic resin having a polar group used in combination with the thermosetting resin having a polar group include phenoxy resins, polyamide-imide resins, polyethylene resins, and polypropylene resins. Among these, the thermoplastic resin having a polar group used in combination with the thermosetting resin having a polar group is preferably a phenoxy resin, a polyamide-imide resin, or a polyethylene resin, and more preferably a phenoxy resin, from the viewpoint of flexibility.

The phenoxy resin is not particularly limited as long as the phenoxy resin has a phenoxy structure in its molecular structure. Here, the "phenoxy structure" refers to a structure in which an oxygen atom is bonded to a benzene ring, and includes not only the phenoxy group ($C_6H_5$-O-), but also a partially substituted phenoxy group and a partially reacted phenoxy groups by hydrogenation.

Examples of phenoxy resins include phenoxy resins having a bisphenol skeleton, phenoxy resins having a novolak skeleton, phenoxy resins having a naphthalene skeleton, and phenoxy resins having a biphenyl skeleton. Among these, the phenoxy resin is preferably a phenoxy resin having a bisphenol skeleton from the viewpoint of versatility.

Examples of phenoxy resins having a bisphenol skeleton include bisphenol A type phenoxy resin, bisphenol F type phenoxy resin, bisphenol A and bisphenol F copolymer phenoxy resin, bisphenol S type phenoxy resin, brominated bisphenol A type phenoxy resin, and hydrogenated bisphenol A type phenoxy resin.

One type of these phenoxy resins may be used alone, or two or more types may be used in combination.

The weight average molecular weight of the phenoxy resin is not particularly limited, and may be, for example, 500 to 100,000, may be 2,000 to 100,000, may be 5,000 to 100,000, or may be 20,000 to 90,000.

The resin having a polar group may contain a thermoplastic resin from the viewpoint of reducing curing shrinkage during curing. Among thermoplastic resins having a polar group, polyamide-imide resins are preferable from the viewpoint of adhesiveness.

A polyamide-imide resin is a resin having an amide bond and an imide bond in its main chain. Preferable specific examples of polyamide-imide resins include polyamide-imide resins having at least one selected from the group consisting of a polyalkylene oxide structure and a polysiloxane structure. These polyamide-imide resins are preferable from the viewpoint of relaxation of stress due to deformation of the polyamide-imide resin. These polyamide-imide resins may be polyamide-imide resins synthesized using, for example, polyalkylene oxide-modified diamines and polysiloxane-modified diamines.

The unit structure of the polyalkylene oxide structure that may be contained in the polyamide-imide resin is preferably an alkylene oxide structure having 1 to 10 carbon atoms, more preferably an alkylene oxide structure having 1 to 8 carbon atoms, and further preferably an alkylene oxide structure having 1 to 4 carbon atoms. Among these, a polypropylene oxide structure is preferable as the polyalkylene oxide structure. The alkylene group in the alkylene oxide structure may be linear or branched. The number of unit structures in the polyalkylene oxide structure may be one, or two or more.

Examples of the polysiloxane structure that may be contained in the polyamide-imide resin include a polysiloxane structure in which some or all of the silicon atoms in the polysiloxane structure are substituted with an alkyl group having 1 to 20 carbon atoms or an aryl group having 6 to 18 carbon atoms.

Examples of alkyl groups having 1 to 20 carbon atoms include methyl group, ethyl group, n-propyl group, isopropyl group, n-butyl group, t-butyl group, n-octyl group, 2-ethylhexyl group, and n-dodecyl group. Among these, a methyl group is preferable.

The aryl group having 6 to 18 carbon atoms may be unsubstituted or substituted with a substituent. Examples of substituents when an aryl group has a substituent include halogen atom, an alkoxy group, and a hydroxy group. Specific examples of the aryl group having 6 to 18 carbon atoms include a phenyl group, a naphthyl group, and benzyl group. Among these, a phenyl group is preferable.

One type of the alkyl group having 1 to 20 carbon atoms or the aryl group having 6 to 18 carbon atoms may be used alone, or two or more types may be used in combination.

In addition, examples of preferable aspect of the polyamide-imide resin include a polyamide-imide resin having a structural unit derived from diimidecarboxylic acid or derivatives thereof and a structural unit derived from aromatic diisocyanate or aromatic diamine.

The method for producing a polyamide-imide resin having a structural unit derived from a diimidecarboxylic acid or a derivative thereof and a structural unit derived from an aromatic diisocyanate or an aromatic diamine is not particularly limited, and examples thereof include an isocyanate method and an acid chloride method.

In the isocyanate method, a polyamide-imide resin is synthesized using a diimidecarboxylic acid and an aromatic diisocyanate. In the acid chloride method, a polyamide-imide resin is synthesized using a diimidecarboxylic acid chloride and an aromatic diamine. The isocyanate method for synthesizing a diimidecarboxylic acid and an aromatic diisocyanate is more preferable because it is easy to optimize the structure of the polyamide-imide resin.

When the resin composition contains a polyamide-imide resin, the proportional content of the polyamide-imide resin relative to the total amount of the resin may be 80% by mass or more, 90% by mass or more, or 100% by mass. Further, the proportional content of the polyamide-imide resin with respect to the total amount of the resin may be 10% by mass to 90% by mass, may be 20% by mass to 80% by mass, may be 30% by mass to 70% by mass, or may be 40% by mass to 60% by mass.

When the resin composition contains a polyamide-imide resin, the proportional content of the polyamide-imide resin relative to the solid content of the resin composition may be 0.01% by mass to 10% by mass, may be 0.1% by mass to 9% by mass, or may be 1% by mass to 8% by mass.

When the resin having a polar group contains a thermoplastic resin, the thermoplastic resin and the thermosetting resin may be combined from the viewpoint of further improving the strength of the film after film formation and suppressing curing shrinkage during curing. When a polyamide resin is used as the thermoplastic resin having a polar group, a polyamide-imide resin and an epoxy resin may be used in combination from the viewpoint of compatibility between heat resistance, high elastic modulus, and adhesiveness. When the polyamide-imide resin and the epoxy resin are used together in the resin composition, the mass ratio of the polyamide-imide resin and the epoxy resin (polyamide-imide resin/epoxy resin) is not particularly limited, and may be 20/80 to 80/20, 30/70 to 70/30, or 40/60 to 60/40.

The weight average molecular weight of the resin having a polar group is not particularly limited, and may be 10,000 or more, 20,000 or more, or 50,000 or more. That is, the resin having a polar group may contain a resin having a weight average molecular weight of 10,000 or more. When the weight average molecular weight of the resin is 10,000 or more, it tends to be possible to suppress dusting on the surface when the resin composition is dried to form a film. The upper limit of the weight average molecular weight is not particularly limited, and may be 1000,000 or less or 900,000 or less.

From the viewpoint of flexibility, the weight average molecular weight of the resin having a polar group may be less than 10,000, 8000 or less, or 5,000 or less.

The weight average molecular weight of the resin is measured using gel permeation chromatography using polystyrene as a reference substance.

The proportional content of the resin having a polar group in the resin composition is not particularly limited, and the content is preferably 2% by mass to 25% by mass relative to the solid content of the resin composition, more preferably 2% by mass to 12% by mass, further preferably 3% by mass to 10% by mass, and particularly preferably 4% by mass to 9% by mass, from the viewpoint of achieving both adhesiveness and high acoustic impedance.

The resin composition may contain a resin having no polar group in addition to the resin having a polar group. The proportional content of the resin having a polar group with respect to the total amount of the resin is preferably 60% by mass or more, more preferably 70% by mass or more, further preferably 80% by mass or more, and particularly preferably 90% by mass or more. The proportional content of the resin having a polar group with respect to the total amount of the resin may be 100% by mass or 95% by mass or less.

The total proportional content of the resin in the resin composition (that is, the total proportional content of the resin having a polar group and optionally the resin having no polar group) is preferably 2% by mass to 25% by mass based on the solid content of the resin composition, more preferably 2% by mass to 12% by mass, further preferably 3% by mass to 10% by mass, and particularly preferably 4% by mass to 9% by mass.

When the resin composition contains a resin having no polar group, the weight average molecular weight of the resin having no polar group is not particularly limited, and is preferably 10,000 or more, may be 20,000 or more, and may be 50,000 or more. When the weight average molecular weight of the resin is 10,000 or more, it tends to be possible to suppress dusting on the surface when the resin composition is dried to form a film. The upper limit of the weight average molecular weight is not particularly limited, and may be 1000,000 or less or 900,000 or less. When the resin having no polar group contained in the resin composition is polymerized in forming the functional film, the weight average molecular weight of the polymerized resin is preferably within the above range.

When the resin composition contains a plurality of resins, it is preferable that each resin independently has a weight average molecular weight within the above range.

When the resin composition contains both a resin having a weight average molecular weight of 10,000 or more and a resin having a weight average molecular weight of less than 10,000, the proportion of the resin having a weight average molecular weight of less than 10,000 is not particularly limited. From the viewpoint of flexibility, the proportion of the resin having a weight average molecular weight of less than 10,000 is preferably 50% by mass or more, may be 60% by mass or more, or may be 70% by mass or more. In addition, the proportion of the resin having a weight average molecular weight of less than 10,000 may be 30% by mass or less, 20% by mass or less, or 10% by mass or less with respect to the total resin.

When the resin composition contains a thermosetting resin, the resin composition may further contain a curing agent. For example, when an epoxy resin is used as the thermosetting resin, examples of the curing agent include an acid anhydride curing agent, an amine curing agent, a phenolic curing agent, a polyaddition curing agent such as a mercaptan curing agent, and a latent curing agent such as imidazole.

The proportional content of the curing agent may be 0.1% by mass to 50% by mass, 1% by mass to 30% by mass, 1% by mass to 10% by mass, 1% by mass to 20% by mass, or 1% by mass to 10% by mass, with respect to the total solid content of the resin composition.

When the curing agent is an addition polymerization type curing agent, the ratio of the number of equivalents of the functional group of the thermosetting resin to the number of equivalents of the functional group of the curing agent reactive with the functional group of the thermosetting resin (number of equivalents of functional group of thermosetting resin:number of equivalents of functional group of curing agent) may be from 1:1 to 1:3, or from 1:1 to 1:2.

<Coupling Agent>

The resin composition may contain a coupling agent. When the resin composition contains a coupling agent, the adhesion of the obtained functional film to the base material tends to be improved.

The type of coupling agent is not particularly limited, and examples of the coupling agent include silane-based compounds, titanium-based compounds, aluminum chelate compounds, and aluminum/zirconium-based compounds. Among these, a silane coupling agent is preferable from the viewpoint of adhesion to a base material such as glass. One type of coupling agent may be used alone, or two or more types may be used in combination.

Examples of silane coupling agents include silane coupling agents having a vinyl group, an epoxy group, a methacryl group, an acryl group, an amino group, an isocyanurate group, a ureido group, a mercapto group, an isocyanate group, and an acid anhydride group. Among these, a silane coupling agent having an epoxy group or an amino group is preferable, and a silane coupling agent having an epoxy group or an anilino group is more preferable. In particular, when at least one selected from the group consisting of polyamide-imide resins and epoxy resins is used as the resin, from the viewpoint of good compatibility with polyamide-imide resins and epoxy resins, a silane coupling agent having an epoxy group or an amino group is preferably used, and a silane coupling agent having an epoxy group or an anilino group is more preferably used.

Specific examples of silane coupling agents include 3-glycidoxypropyltrimethoxysilane,

3-glycidoxypropyltriethoxysilane, 3-glycidoxypropylmethyldiethoxysilane, 3-glycidoxypropylmethyldimethoxysilane, 2-(3,4-epoxycyclohexyl)ethyltrimethoxysilane, 3 -aminopropyltriethoxysilane, 3 -aminopropyltrimethoxysilane, N-(2-aminoethyl)-3-aminopropylmethyldimethoxysilane, N-(2-aminoethyl)-3-aminopropyltrimethoxysilane, N-phenyl-3-aminopropyltrimethoxysilane, 3-mercaptopropyltrimethoxysilane, 3-mercaptopropyltriethoxysilane, and 3-ureidopropyltriethoxysilane.

When the resin composition contains a coupling agent, the proportional content of the coupling agent in the resin composition is not particularly limited, and is preferably 0.05% by mass to 5% by mass relative to the solid content of the resin composition, and is more preferably 0.1% by mass to 2.5% by mass.

<Solvent>

The resin composition may contain a solvent from the viewpoint of adjusting the viscosity. The solvent is preferably a solvent that has a boiling point of 100°C or higher from the viewpoint of preventing drying of the composition in the step of applying the composition, and is more preferably a solvent that has a boiling point of 300°C or lower to suppress the generation of voids.

The type of solvent is not particularly limited, and examples thereof include alcohol-based solvents, ether-based solvents, ketone-based solvents, amide-based solvents, aromatic hydrocarbon-based solvents, ester-based solvents, and nitrile-based solvents. More specific examples thereof include methyl isobutyl ketone, dimethylacetamide, dimethylformamide, dimethylsulfoxide, N-methyl-2-pyrrolidone, $\gamma$-butyrolactone, sulfolane, cyclohexanone, methylethylketone, dimethylpropanamide, 2-(2-hexyloxyethoxy)ethanol, 2-(2-ethoxyethoxy)ethanol, 2-(2-butoxyethoxy)ethanol, diethylene glycol monoethyl ether, terpineol, stearyl alcohol, tripropylene glycol methyl ether, diethylene glycol, propylene glycol-n-propyl ether, dipropylene glycol-n-butyl ether, tripropylene glycol-n-butyl ether, 1,3-butanediol, 1,4-butanediol, p-phenylphenol, propylene glycol phenyl ether, tributyl citrate, 4-methyl-1,3-dioxolan-2-one, and paraffin. One type of solvent may be used alone, or two or more types may be used in combination.

The content of the solvent relative to the total amount of the resin composition is preferably 0.1% by mass to 10% by mass, preferably 0.5% by mass to 9% by mass, and more preferably 1% by mass to 8% by mass, from the viewpoint of viscosity shortening of the heating step, and the like.

(Other Components)

The resin composition may contain other components as needed. Other components include additives such as thixotropic agents and dispersing agents.

Examples of thixotropic agents include 12-hydroxystearic acid, 12-hydroxystearic acid triglyceride, ethylenebisstearic acid amide, hexamethylenebisoleic acid amide, N,N'-distearyladipic acid amide, and fumed silica. One type of thixotropic agent may be used alone, or two or more types may be used in combination. The proportional content of the thixotropic agent is not particularly limited, and may be 0.01% by mass to 5% by mass, 0.05% by mass to 3% by mass, and 0.1% by mass to 1% by mass, with respect to the total amount of the resin composition.

Examples of the dispersing agent include dispersing agents compatible with the resin. By using a dispersing agent compatible with the resin, there is a tendency that the filler can be suitably dispersed and the adhesion to the base material can be enhanced. Specifically, examples of the dispersing agent include phosphoric acid, carboxylate, and carboxylic acid amine salts. The proportional content of the dispersing agent may be 0.01% by mass to 5% by mass, or may be 0.05% by mass to 3% by mass, with respect to the total solid content of the resin composition.

In addition, the resin composition may or may not contain a conductive filler as another component. The proportional content of the conductive filler in the entire resin composition is preferably less than 1 volume%, more preferably less than 0.1 volume%, and further preferably less than 0.01 volume%, from the viewpoint of obtaining an insulating functional film.

In addition, the conductive filler refers to a filler having a volume resistivity of less than $1 \times 106$ Q cm at 25°C.

Examples of conductive fillers include metals, conductive metal oxides, and carbon black.

<Preparation and Properties of Resin Composition>

The method for preparing the resin composition is not particularly limited, and examples thereof include a method for mixing the above-described components contained in the resin composition in predetermined incorporated amounts using a mixer or the like.

The viscosity of the resin composition is preferably 10 Pa s to 300 Pa s, more preferably 20 Pa s to 250 Pa s, and further preferably 30 Pa s to 200 Pa s at 25°C from the viewpoint of handling properties. The viscosity of the resin composition is a measured value obtained at 25°C and 2.5 revolutions per minute (rpm) for 144 seconds using an E-type rotational viscometer equipped with an SPP rotor according to JIS Z 3284-3:2014, and is measured as the average of two measurements.

[Application of Resin Composition]

The resin composition of the present disclosure is used, for example, as an ultrasonic reflecting material for amplifying ultrasonic signals. Examples of the ultrasonic reflecting material include, for example, a functional film used around a piezoelectric element, and specific examples thereof include a film obtained by drying the resin composition (hereinafter referred to as "film"), and a cured product obtained by curing the resin composition (hereinafter also simply referred to as "cured product").

A film formed by drying the resin composition of the present disclosure can be formed, for example, by the following method. First, a resin composition layer is formed by applying the resin composition described above to at least a part of the surface of a base material. After that, the resin composition layer is dried to obtain a film. The method for applying the resin composition to the base material is not particularly limited, and examples thereof include a spray method, a screen printing method, a rotary coating method, a spin coating method, and a bar coating method. Among others, the resin composition of the present disclosure is suitable for applications using screen printing.

The base material to which the resin composition is applied is not particularly limited, and includes glass, metal, resin material, metal deposition film, metal oxide, ceramic, nonwoven fabric, glass fiber, aramid fiber, carbon fiber, glass fiber prepreg, aramid fiber prepreg, and carbon fiber prepreg. Among others, the resin composition of the present disclosure has excellent adhesion to base materials having polarity on the surface, such as glass, metal, metal oxide, glass fiber, aramid fiber, and glass fiber prepreg.

A method for drying the resin composition is not particularly limited, and examples thereof include a method for heat-treating using a device such as a hot plate and an oven, and a method for natural drying. The conditions for drying by heat treatment are not particularly limited as long as the solvent in the resin composition is sufficiently volatilized, and may be 80°C to 150°C for approximately 5 minutes to 120 minutes.

The curing method for obtaining a cured product obtained by curing the resin composition of the present disclosure is not particularly limited, and curing can be performed by heat treatment or the like. For curing by heat treatment, box type dryer, hot air conveyor type dryer, quartz tube furnace, hot plate, rapid thermal annealing, vertical diffusion furnace, infrared curing furnace, electron beam curing furnace, and microwave curing furnace.

The average thickness of the film or cured product is, for example, 4 $\mu$m to 100 $\mu$m, preferably 4 $\mu$m to 90 $\mu$m, more preferably 4 $\mu$m to 80 $\mu$m, and further preferably 4 $\mu$m to 50 $\mu$m, from the viewpoint of a low noise ratio.

The average thickness of the film or cured product is measured using, for example, a micrometer, and obtained as the arithmetic mean value of the thickness at any five points.

From the viewpoint of antifouling properties and oil resistance, the maximum height Rz of the film or cured product is preferably 10.0 $\mu$m or less, more preferably 8.0 $\mu$m or less, further preferably 6.0 $\mu$m or less, particularly preferably 5.0 $\mu$m or less, and extremely preferably 3.5 $\mu$m or less.

In addition, the arithmetic mean roughness Ra of the film or cured product is preferably 1.0 $\mu$m or less, more preferably 0.8 $\mu$m or less, and further preferably 0.6 $\mu$m or less, and particularly preferably 0.5 $\mu$m or less, from the viewpoint of a low noise ratio.

The arithmetic mean roughness Ra and the maximum height Rz of the film or cured product are values obtained based on JIS B 0601:2013. Specifically, it is a value measured using a 3D microscope (for example, VR-3200 manufactured by Keyence, 12 times magnification). Regarding the measurement conditions of the arithmetic mean roughness Ra and the maximum height Rz, the measurement length is set to 20 mm, and the average value of the values obtained by measuring three points is used as the arithmetic mean roughness Ra and the maximum height Rz.

The density of the film or cured product is preferably 2.0 g/cm$^3$ or more, more preferably 2.3 g/cm$^3$ or more, and further preferably 2.6 g/cm$^3$ or more. The upper limit of the specific gravity of the film or cured product is not particularly limited, and may be, for example, 9.0 $g/cm^3$ or less. From the above viewpoints, the specific gravity of the film or cured product may be 2.0 $g/cm^3$ to 9.0 $g/cm^3$, 2.3 $g/cm^3$ to 9.0 $g/cm^3$, or 2.6 $g/cm^3$ to 9.0 $g/cm^3$.

The density of the film or cured product can be obtained by forming, for example, a 10 mm square sample and measuring the average thickness and mass of the sample.

The volume resistivity of the film or cured product is preferably $1.0 \times 10^6$ $\Omega\cdot$cm or more, more preferably $1.0 \times 10^7$ $\Omega\cdot$cm or more, and further preferably $1.0 \times 10^8$ $\Omega\cdot$cm or more. Regarding the volume resistivity, the insulation resistance value can be measured by an insulation resistance meter (for example, 8340A manufactured by Advantest) according to JIS C 2139-3-1:2018, and the volume resistivity can be calculated from the area and thickness of the electrode contact surface.

The dielectric breakdown strength of the film or cured product measured by the method described in Examples is preferably 5 kV/mm or more, more preferably 10 kV/mm or more, and further preferably 15 kV/mm or more.

The elastic modulus of the film or cured product at 50°C is preferably high from the viewpoint of preventing scratches during film molding, preferably 0.1 GPa to 2.0 GPa, and more preferably 0.1 GPa to 1.5 GPa, and further preferably 0.1 GPa to 1.0 GPa.

The elastic modulus of the film or cured product at 50°C can be obtained by measurement using a viscoelasticity measuring device RSA-3 (TA Instruments) under the conditions of a temperature rise rate of 10°C/min and a frequency of 1 Hz in a tensile mode.

The acoustic impedance of the film or cured product is preferably $5.0 \times 10^6$ $kg/m^2s$ to $20.0 \times 10^6$ $kg/m^2s$, more preferably $6.0 \times 10^6$ $kg/m^2s$ to $20.0 \times 10^6$ $kg/m^2s$, further preferably $7.0 \times 10^6$ $kg/m^2s$ to $20.0 \times 10^6$ $kg/m^2s$.

The acoustic impedance is obtained from the following Equation (2) from the elastic modulus and density at 50°C.

$$\text{Equation (2): acoustic impedance} = (\text{sonic velocity} \times \text{density}) = (\text{elastic modulus} \times \text{density})^{1/2}$$

The ultrasonic noise ratio in the film or cured product is preferably 0.3 or less, more preferably 0.2 or less, and further preferably 0.1 or less.

The above noise ratio is obtained by measurement by an ultrasonic flaw detector (for example, manufactured by Insight, model number: IS-300, generated ultrasonic frequency: 35 MHz) using a sample in which a film or cured product is formed on a copper plate having a thickness of 300 $\mu$m. Specifically, ultrasonic waves are generated from an ultrasonic wave generation source of an ultrasonic flaw detector, and the first reflected wave, which is the ultrasonic wave reflected by the surface of the film of the sample opposite to the copper plate, and the second reflected wave, which is the ultrasonic wave reflected by at least one of the reflecting point in the film and the copper plate on the bottom surface after passing through the film are detected by an ultrasonic probe of the ultrasonic flaw detector. Here, the second reflected wave is detected a plurality of times according to the reflection position and the number of times of reflection. Among the second reflected waves detected a plurality of times, when the amplitude value of the second reflected wave detected for the first time is set to $A_1$, and the amplitude value of the last second reflected wave of which the amplitude value is 10% or more of the amplitude value of the first reflected wave is set to $A_n$, the noise ratio is expressed by the following Equation (3).

$$\text{Equation (3): noise ratio} = A_n/A_1$$

The attenuation rate of ultrasonic waves in the film or cured product is preferably 50 dB/mm or less, more preferably 40 dB/mm or less, and further preferably 30 dB/mm or less.

The attenuation rate is obtained by generating an ultrasonic wave of 35 MHz in water and using the Equation (4) from the amplitude value $B_0$ before the ultrasonic wave passes through the sheet and the amplitude value $B_1$ after the ultrasonic wave passes through the sheet, according to JIS-Z2354-2012 using a cured product sample having a thickness of 0.3 mm, using an ultrasonic flaw detector (for example, manufactured by Insight, model number: IS-300, generated ultrasonic frequency: 35 MHz).

$$\text{Equation (4): attenuation rate} = 1/(2 \times 0.3) \times 10 \times \log(B_0/B_1)$$

The resin composition of the present disclosure can be suitably used as an ultrasonic reflecting material. In addition, the resin composition of the present disclosure can also be suitably used as an insulating layer formed by screen printing.

Examples

Next, the present invention will be described with reference to Examples, but the present invention is not limited to these Examples.

[Preparation of Composition]

The following components were incorporated in proportions (% by mass) shown in Tables 1 and 2 to obtain a resin composition.
In addition, a blank "-" in Tables 1 and 2 means that the component is not incorporated. Further, Tables 1 and 2 show the proportional content (by volume) of the insulating filler relative to the total solid content (all components excluding volatile components such as solvents) of the resin composition.
· Resin 1: polyamide-imide resin (KS-9900F (trade name), Showa Denko Materials Co., Ltd., weight average molecular weight: 49,000)
· Resin 2: epoxy resin (YX8034 (trade name), Mitsubishi Chemical Corporation, weight average molecular weight: 1150)
· Resin 3: epoxy resin (TG-G (trade name), Shikoku Chemicals Corporation, molecular weight: 340)
· Resin 4: epoxy resin (HP4032D (trade name), DIC Corporation, molecular weight: 272)
· Resin 5: phenoxy resin (YP-50 (trade name), NIPPON STEEL Chemical & Material (Thailand) Co.,Ltd., weight average molecular weight: 70,000)
· Curing agent: imidazole
· Thixotropic agent: fumed silica (Aerosil R972, Nippon Aerosil Co., Ltd.)
· Dispersing agent 1: phosphate (BYK-106 (trade name), BYK-Chemie Japan K.K.)
· Dispersing agent 2: phosphate (BYK-9010 (trade name), BYK-Chemie Japan K.K.)
· Coupling agent: N-phenyl-3-aminopropyltrimethoxysilane (KBM-573 (trade name), Shin-Etsu Chemical Co., Ltd.)
· Filler 1: Bismuth oxide ($Bi_2O_3$) (D50: 2.0 $\mu$m, D99: 5.0 $\mu$m, shape: cubic, aspect ratio: 3, specific gravity: 8.9)
· Filler 2: aluminum oxide ($Al_2O_3$) (D50: 0.5 $\mu$m, D99: 3.2 $\mu$m, shape: spherical, aspect ratio: 1, specific gravity: 4.0)
· Filler 3: aluminum oxide ($Al_2O_3$) (D50: 5.4 $\mu$m, D99: 20.0 $\mu$m, shape: spherical, aspect ratio: 1, specific gravity: 4.0)
· Filler 4: Bismuth oxide ($Bi_2O_3$) (D50: 0.6 $\mu$m, D99: 2.8 $\mu$m, shape: cubic, aspect ratio: 2, specific gravity: 8.9)

[Formation of Film]

Using a screen printer (LS-150, Newlong Seimitsu Kogyo Co., Ltd.) and a screen mesh plate (WT360-16, Sonocom Co., Ltd.), a coating film of 100 mm square was formed on a soda glass plate having a thickness of 1.0 mm at a squeegee speed of 10 mm/sec and a clearance of 1.0 mm. A film was obtained by drying a coating film formed on a soda glass plate in an oven at 120°C for 1 hour to form a film. The obtained film was a cured product obtained by curing the resin composition.

[Average Thickness of Film]

The average thickness of the film after the film formation was obtained as the average value of the thickness obtained by measuring the thickness of the glass plate at 5 points after adjusting the thickness of the glass plate to zero using a micrometer. The results are shown in Tables 1 and 2.

[Surface Roughness of Film]

Arithmetic mean roughness Ra and the maximum height Rz of the film after film formation were obtained using a 3D microscope (VR-3200 manufactured by Keyence, 12 times magnification) based on JIS B 0601:2013 under the above measurement conditions. The results are shown in Tables 1 and 2.

[Film Density]

The density of the film was calculated by Equation (1) from the average thickness $T_0$ (mm) of the film after film formation, the mass $W_0$ (g) of the glass plate before film formation, and the mass $W_1$ (g) of the glass plate after film formation. The results are shown in Tables 1 and 2.

$$\text{Equation (1): density (g/cm}^3) = \{(W_1 - W_0)/(100 \times 100 \times T_0 \times 10^{-3})\}$$

[Volume Resistivity of Film]

The volume resistivity of the film after film formation was measured by the method described above. The results are shown in Tables 1 and 2.

[Film Insulation Test]

Using a screen printer (LS-150, Newlong Seimitsu Kogyo Co., Ltd.) and a screen mesh plate (WT360-16, Sonocom Co., Ltd.) on a copper foil having a thickness of 30 $\mu$m, a coating film of 100 mm square was formed at a squeegee speed of 10 mm/sec and a clearance of 1.0 mm. A film was obtained by drying the formed coating film in an oven at 120°C for 1 hour to form a film. An electrode is connected to the copper foil surface, an electrode of $\Phi$20 mm is installed on the film forming surface side, a dielectric breakdown test is performed in the atmosphere at a pressure rise rate of 500 V/s, and the dielectric breakdown strength is calculated from the dielectric breakdown voltage and the average thickness of the film. The results are shown in Tables 1 and 2.

[Elastic Modulus of Film]

The elastic modulus at 50°C of the film after film formation was measured by the method described above. The results are shown in Tables 1 and 2.

[Acoustic Impedance of Film]

The acoustic impedance of the film after film formation was obtained by the method described above. The results are shown in Tables 1 and 2.

[Ultrasonic Noise Ratio in Film]

The ultrasonic noise ratio in the film after film formation was obtained by the method described above. The results are shown in Tables 1 and 2.

[Attenuation Rate of Ultrasonic Waves in Film]

The attenuation rate of ultrasonic waves in the film after film formation was determined by the method described above. The results are shown in Tables 1 and 2.

[Table 1]

| Components or the like | Unit | Example 1 | Example 2 | Example 3 | Example 4 | Example 5 | Example 6 |
|---|---|---|---|---|---|---|---|
| Resin 1 | % by mass | 10.1 | 2.9 | - | 24.8 | 5.0 | - |
| Resin 2 | % by mass | - | - | 2.3 | - | - | - |
| Resin 3 | % by mass | - | - | 0.3 | - | - | - |
| Resin 4 | % by mass | - | - | - | - | - | 6.7 |
| Resin 5 | % by mass | - | - | - | - | - | 2.0 |
| Curing agent | % by mass | - | - | 0.3 | - | - | 0.3 |
| Thionyl group | % by mass | 0.1 | 0.1 | 0.1 | 0.1 | 0.1 | - |

(continued)

| Components or the like | Unit | Example 1 | Example 2 | Example 3 | Example 4 | Example 5 | Example 6 |
|---|---|---|---|---|---|---|---|
| Dispersing agent 1 | % by mass | 0.9 | 1.0 | 1.0 | 0.7 | 0.9 | - |
| Dispersing agent 2 | % by mass | - | - | - | - | - | 0.4 |
| Coupling agent | % by mass | 1.9 | 2.0 | 2.0 | 1.4 | 2.0 | - |
| Filler 1 | % by mass (volume%) | 87 (60) | 94 (77) | 94 (77) | - (-) | - (-) | - (-) |
| Filler 2 | % by mass (volume%) | - (-) | - (-) | - (-) | 73 (59) | 92 (84) | - (-) |
| Filler 3 | % by mass (volume%) | - (-) | - (-) | - (-) | - (-) | - (-) | - (-) |
| Filler 4 | % by mass (volume%) | - (-) | - (-) | - (-) | - (-) | - (-) | 90.6 (56) |
| Average thickness | $\mu$m | 15 | 12 | 12 | 6 | 6 | 7 |
| Rz | $\mu$m | 1.7 | 1.7 | 3.0 | 1.0 | 1.0 | 1.2 |
| Ra | $\mu$m | 0.2 | 0.2 | 0.5 | 0.2 | 0.2 | 0.2 |
| Density of film | g/cm$^3$ | 5.6 | 6.6 | 6.6 | 2.8 | 3.5 | 5.6 |
| Volume resistivity | $\Omega \cdot$m | $3.0 \times 10^{13}$ | $3.0 \times 10^{13}$ | $4.0 \times 10^{13}$ | $4.0 \times 10^{13}$ | $4.0 \times 10^{13}$ | $3.8 \times 10^{14}$ |
| Dielectric breakdown voltage | kV/mm | 17 | 21 | 18 | 17 | 20 | 20 |
| Elastic modulus | GPa | 0.2 | 0.2 | 0.8 | 0.8 | 0.8 | 11 |
| Acoustic impedance | kg/m$^2$s | $5.4 \times 10^6$ | $7.7 \times 10^6$ | $10.9 \times 10^6$ | $5.8 \times 10^6$ | $7.8 \times 10^6$ | $13.4 \times 10^6$ |
| Noise ratio | - | 0 | 0 | 0 | 0 | 0 | 0 |
| Attenuation rate | dB/mm | 46 | 40 | 28 | 41 | 34 | 11 |

[Table 2]

| Components or the like | Unit | Comparative example 1 | Comparative example 2 |
|---|---|---|---|
| Resin 1 | % by mass | 100 | 24.8 |
| Resin 2 | % by mass | - | - |
| Resin 3 | % by mass | - | - |
| Resin 4 | % by mass | - | - |
| Resin 5 | % by mass | - | - |
| Curing agent | % by mass | - | - |
| Thionyl group | % by mass | - | 0.1 |

(continued)

| Components or the like | Unit | Comparative example 1 | Comparative example 2 |
|---|---|---|---|
| Dispersing agent 1 | % by mass | - | 0.7 |
| Dispersing agent 2 | % by mass | - | - |
| Coupling agent | % by mass | - | 1.4 |
| Filler 1 | % by mass (volume%) | - (-) | - (-) |
| Filler 2 | % by mass (volume%) | - (-) | - (-) |
| Filler 3 | % by mass (volume%) | - (-) | 73 (59) |
| Filler 4 | % by mass (volume%) | - (-) | - (-) |
| Average thickness | $\mu$m | 20 | 50 |
| Rz | $\mu$m | 1.0 | 9.9 |
| Ra | $\mu$m | 0.2 | 1.5 |
| Density of film | g/cm$^3$ | 1.1 | 2.8 |
| Volume resistivity | $\Omega \cdot$m | $2.0 \times 10^{14}$ | $4.0 \times 10^{13}$ |
| Dielectric breakdown voltage | kV/mm | 5 | 17 |
| Elastic modulus | GPa | 0.03 | 0.8 |
| Acoustic impedance | kg/m$^2$s | $1.7 \times 10^6$ | $5.8 \times 10^6$ |
| Noise ratio | - | 0 | 0.48 |
| Attenuation rate | dB/mm | 52 | 41 |

As shown in Tables 1 and 2, it can be seen that the resin compositions of Examples provide functional films with high acoustic impedance, insulating properties, and a lower noise ratio than those of Comparative Examples.

The disclosure of Japanese Patent Application No. 2020-118017 filed on July 8, 2020 is incorporated herein by reference in its entirety.

All publications, patent applications, and technical standards mentioned herein are incorporated in the present specification to the same extent as if each individual publication, patent application, and technical standard were specifically and individually noted to be incorporated by reference.

**Claims**

1. A resin composition that contains

   a resin that has a polar group, and
   an insulating filler that, on a volume-based particle size distribution curve, has a particle size of no more than 5.0 $\mu$m at a cumulative of 50% from a smaller side and a particle size of no more than 10.0 $\mu$m at a cumulative of 99% from the smaller side, wherein
   the insulating filler accounts for at least 50 volume% of the total solid content of the resin composition.

2. The resin composition according to claim 1, wherein
   the insulating filler contains at least one selected from a group consisting of aluminum oxide, zirconium oxide, titanium oxide, bismuth oxide, silicon dioxide, and tungsten oxide.

3. The resin composition according to claim 1 or 2, wherein

the polar group contains at least one heteroatom selected from a group consisting of nitrogen atoms, oxygen atoms, and sulfur atoms.

4. The resin composition according to any one of claims 1 to 3, wherein
   the resin having the polar group contains at least one selected from the group consisting of polyamide-imide resins, epoxy resins, acrylic resins, polyester resins, and polyether resins.

5. The resin composition according to any one of claims 1 to 4, further containing a coupling agent.

6. The resin composition according to claim 5, wherein
   the coupling agent contains a silane coupling agent.

7. The resin composition according to any one of claims 1 to 6, further containing a solvent.

8. A film obtained by drying the resin composition according to any one of claims 1 to 7.

9. The film according to claim 8, having a maximum height Rz of 5 $\mu$m or less.

10. The film according to claim 8 or 9, having an arithmetic mean roughness Ra of 1 $\mu$m or less.

11. The film according to any one of claims 8 to 10, having an average thickness of 50 $\mu$m or less.

12. The film according to any one of claims 8 to 11, which is used as an ultrasonic reflecting material.

13. A cured product obtained by curing the resin composition according to any one of claims 1 to 7.

14. The cured product according to claim 13, having a maximum height Rz of 5 $\mu$m or less.

15. The cured product according to claim 13 or 14, having an arithmetic mean roughness Ra of 1 $\mu$m or less.

16. The cured product according to any one of claims 13 to 15, having an average thickness of 50 $\mu$m or less.

17. The cured product according to any one of claims 13 to 16, which is used as an ultrasonic reflecting material.

## INTERNATIONAL SEARCH REPORT

| International application No. |
| --- |
| PCT/JP2021/025479 |

**A. CLASSIFICATION OF SUBJECT MATTER**
C08K 5/54(2006.01)i; C08K 7/18(2006.01)i; C08L101/02(2006.01)i; C08J
5/18(2006.01)i; C08K 3/22(2006.01)i; C08K 3/36(2006.01)i
FI: C08L101/02; C08K3/22; C08K3/36; C08K5/54; C08K7/18; C08J5/18
According to International Patent Classification (IPC) or to both national classification and IPC

**B. FIELDS SEARCHED**

Minimum documentation searched (classification system followed by classification symbols)
C08K5/54; C08K7/18; C08L101/02; C08J5/18; C08K3/22; C08K3/36

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | WO 2013/047726 A1 (ZEON CORP.) 04 April 2013 (2013-04-04) claims, paragraphs [0068], [0075], [0127]-[0130], synthesis examples 2-3, examples 1-5, table 1 | 1-11, 13-16<br>12, 17 |
| X<br>A | JP 2006-160934 A (TORAY INDUSTRIES, INC.) 22 June 2006 (2006-06-22) claims, paragraphs [0021], [0026], [0034], examples 1-4, 8 | 1-11, 13-16<br>12, 17 |
| X<br><br>A | WO 2010/147082 A1 (RISHO KOGYO CO., LTD.) 23 December 2010 (2010-12-23) claims, paragraphs [0015], [0026], [0038], examples 1-5, table 1 | 1-4, 7-11, 13-16<br>5-6, 12, 17 |
| X<br>A | WO 2015/075906 A1 (PANASONIC CORP.) 28 May 2015 (2015-05-28) claims, paragraphs [0025], [0034], [0036], [0039]-[0040], [0068], sample #2, table 1 | 1-6, 13-15<br>7-12, 16-17 |

☒ Further documents are listed in the continuation of Box C.    ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 August 2021 (18.08.2021) | 31 August 2021 (31.08.2021) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
| --- | --- |

Form PCT/ISA/210 (second sheet) (January 2015)

**INTERNATIONAL SEARCH REPORT**

| International application No. |
| --- |
| PCT/JP2021/025479 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P, X | WO 2020/196664 A1 (HITACHI CHEMICAL CO., LTD.) 01 October 2020 (2020-10-01) claims, paragraphs [0018], [0063], examples 1-7 | 1-17 |

Form PCT/ISA/210 (continuation of second sheet) (January 2015)

**INTERNATIONAL SEARCH REPORT**
Information on patent family members

International application No.

PCT/JP2021/025479

| Patent Documents referred in the Report | Publication Date | Patent Family | Publication Date |
|---|---|---|---|
| WO 2013/047726 A1 | 04 Apr. 2013 | US 2014/0234614 A1 claims, paragraphs [0083], [0090], [0183]-[0187], synthesis examples 2-3, examples 1-5, table 1 KR 10-2014-0075763 A | |
| JP 2006-160934 A | 22 Jun. 0206 | (Family: none) | |
| WO 2010/147082 A1 | 23 Dec. 2010 | JP 2011-1400 A claims, paragraphs [0015], [0026], [0038], examples 1-5, table 1 | |
| WO 2015/075906 A1 | 28 May 2015 | JP 2017-14302 A claims, paragraphs [0029], [0038], [0040], [0043]-[0044], [0070], example 2, table 1 | |
| WO 2020/196664 A1 | 01 Oct. 2020 | (Family: none) | |

Form PCT/ISA/210 (patent family annex) (January 2015)

**EP 4 180 483 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019017501 A

- JP 2020118017 A